# DEMANDE DE BREVET EUROPEEN

(11) **EP 1 698 909 A1**
(43) Date de publication de la demande: **06.09.2006**
(21) Numéro de dépôt: 06110474.1
(22) Date de dépôt: 28.02.2006
(51) Int. Cl.: G01S 7/03, G01S 13/95

(54) **Module actif intégré à une antenne à balayage électronique et radar comportant une telle antenne, notamment appliqué à la météorologie.**

(30) Priorité: 01.03.2005 FR 0502062
(71) Demandeur: THALES, 92200 Neuilly sur Seine (FR)
(72) Inventeur: CORNIC, Pascal, 29290, SAINT RENAN (FR)
(74) Mandataire: Lucas, Laurent Jacques

(57) **Abrégé**

La présente invention se rapporte à un module actif intégré à une antenne à balayage électronique.

Le module actif, adapté à l'émission radiofréquence, comportent au moins un amplificateur de puissance. Cet amplificateur de puissance délivre un signal alimentant un ou plusieurs éléments rayonnants. Le module actif comporte au moins un générateur de forme d'onde délivrant à l'amplificateur de puissance un signal commandable en phase.

L'invention a également pour objet une antenne à balayage électronique comportant des éléments rayonnants, chaque élément rayonnant étant alimenté par au moins un module actif selon l'invention.

L'invention a encore pour objet un radar comportant au moins une antenne selon l'invention.

L'invention s'applique aux radars et aux systèmes de communications mettant en oeuvre des fonctions d'émission et de réception radiofréquence à balayage électronique comme par exemple les radars météorologiques.

## Description

La présente invention concerne un module actif intégré à une antenne à balayage électronique ainsi qu'un radar comportant une telle antenne. En particulier, l'invention s'applique aux radars et aux systèmes de communications mettant en oeuvre des fonctions d'émission et de réception radiofréquence à balayage électronique. Elle s'applique aussi par exemple aux radars météorologiques.

Les radars météorologiques aéroportés installés actuellement sur les avions civils sont dotés de systèmes à balayage mécanique. Cette technologie, bien que présentant un faible coût de réalisation, n'apporte pas aujourd'hui certains avantages introduit par les techniques de balayage électronique.

En effet, l'utilisation du balayage électronique dans les radars aéroportés présente de nombreux avantages, comme par exemple une grande agilité dans la gestion des modes radars ou encore la réalisation de plusieurs fonctions au sein d'un même radar.

Cependant, la mise en oeuvre du balayage électronique est complexe et coûteuse. En effet, dans le cas par exemple d'un radar à balayage électronique à modules actifs, chaque module comporte classiquement les fonctions de déphasage et d'amplification pour les voies d'émission et de réception, le contrôle des voies d'émission et de réception, la calibration des amplificateurs ainsi que la séparation des voies d'émission et de réception. De plus, l'ensemble des modules actifs doit être synchronisé de façon précise. Enfin il est nécessaire de contrôler finement la puissance d'émission de chacun des modules. La complexité de développement et de production rend la mise en oeuvre de ces technologies et le coût du radar élevé.

L'invention a notamment pour but de pallier les inconvénients précités. A cet effet, l'invention a pour objet un module actif adapté à l'émission radiofréquence. Le module actif comporte au moins un amplificateur de puissance, ledit amplificateur de puissance délivrant un signal alimentant un ou plusieurs éléments rayonnants. Le module actif comporte au moins un générateur de forme d'onde délivrant à l'amplificateur de puissance un signal commandable en phase.

Le générateur de forme d'onde peut être un circuit à synthèse digitale directe.

Le générateur de forme d'onde peut délivrer un signal en fréquence intermédiaire. Le signal en fréquence intermédiaire est transposé et/ou multiplié en fréquence par au moins un convertisseur de fréquence montante.

Le module actif peut comporter au moins un amplificateur faible bruit, un circulateur relié d'une part à un élément rayonnant, d'autre part à l'amplificateur de puissance et à l'amplificateur faible bruit. Le signal de sortie de l'amplificateur faible bruit est dirigé vers un récepteur par l'intermédiaire d'une sortie.

Le signal de sortie de l'amplificateur faible bruit peut être transposé et/ou multiplié en fréquence par au moins un convertisseur de fréquence descendante.

Le convertisseur de fréquence montante peut envoyer au convertisseur de fréquence descendante un signal conjugué et retardé du signal envoyé à l'amplificateur de puissance, le convertisseur de fréquence descendante multipliant le signal reçu de l'amplificateur faible bruit par le signal conjugué.

L'invention a aussi pour objet une antenne à balayage électronique comportant des éléments rayonnants, chaque élément rayonnant étant alimenté par au moins un module actif selon l'invention.

L'antenne à balayage électronique peut comporter au moins un circuit de contrôle de la phase de pointage délivrant une consigne de phase propre à chaque module actif, la phase étant déterminée pour chaque module actif en fonction de la direction de pointage souhaitée.

L'invention a encore pour objet un radar comportant au moins une antenne selon l'invention.

Le radar peut comporter au moins un circuit de contrôle de la phase de pointage délivrant une consigne de phase propre à chaque module actif, la phase étant déterminée pour chaque module actif en fonction de la direction de pointage souhaitée.

Le radar peut notamment être appliqué à la détection et à la localisation des phénomènes météorologiques.

L'invention a notamment pour avantages qu'elle permet de simplifier la conception des modules actifs du radar à balayage électronique en supprimant les fonctions délicates réalisées en hyperfréquence.

L'invention permet de plus d'augmenter la fiabilité du radar en parallélisant la fonction d'émission. Elle permet en outre de simplifier, voire d'éviter, la calibration des modules actifs.

D'autres caractéristiques et avantages de l'invention apparaîtront à l'aide de la description qui suit faite en regard des dessins annexés qui représentent :
- la figure 1, par un synoptique une antenne à balayage électronique à modules actifs selon l'état de l'art ;
- la figure 2, par un synoptique une antenne à balayage électronique à modules actifs selon l'invention par génération de forme d'onde distribuée ;
- la figure 3, par un synoptique un autre mode de réalisation d'un module actif selon l'invention

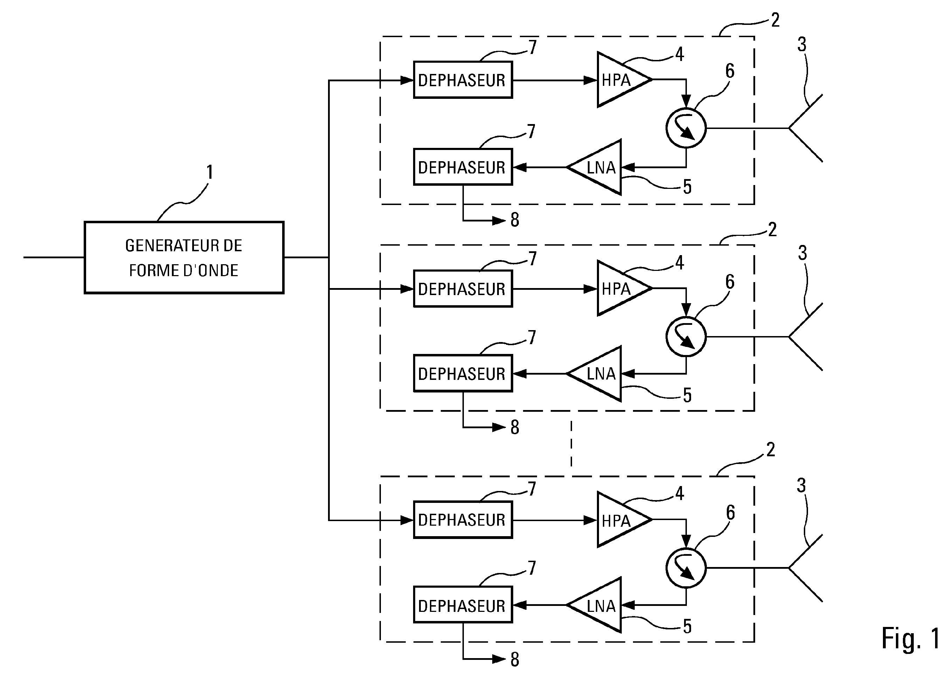

La figure 1 illustre une antenne à balayage électronique à modules actifs selon l'état de l'art. Il comporte notamment un générateur de forme d'onde 1 ainsi qu'un ensemble de modules actifs 2, répartis sur la surface d'une antenne, reliés chacun à un ou plusieurs éléments rayonnants 3. Chaque module actif 2 comporte au moins une voie d'émission, ladite voie d'émission comportant au moins un déphaseur hyperfréquence 7 et un amplificateur de puissance 4. Chaque module actif 2 peut comporter en outre une voie de réception, ladite voie de réception comportant un déphaseur hyperfréquence 7 et un amplificateur à faible bruit 5.

Un circulateur 6 s'intercale entre d'une part les voies d'émission et de réception et d'autre part entre un ou plusieurs éléments rayonnants 3, de telle sorte qu'un signal issu de la voie d'émission passe dans l'élément rayonnant 3 et qu'un signal issu de l'élément rayonnant 3 passe dans la voie de réception.

Tous les modules actifs 2 reçoivent sur la voie d'émission un signal à émettre provenant du générateur de forme d'onde 1. La voie de réception se termine par une sortie 8 vers un récepteur.

La fonction de balayage électronique est réalisée par les déphaseurs hyperfréquence 7 présents dans chaque module actif 2. Le signal reçu du générateur de forme d'onde 1 est déphasé d'une certaine valeur pour chaque module actif 2, le déphasage appliqué étant notamment fonction de la direction souhaitée pour le faisceau d'antenne.

Chaque module actif 2 assure notamment les fonctions suivantes :
- déphasage et amplification avec contrôle d'amplitude du signal à l'émission ;
- amplification faible bruit, déphasage et contrôle d'amplitude du signal à la réception ;
- contrôle et calibration ;
- séparation des émissions et des réceptions.

Le nombre de fonctions réalisées au sein de chaque module actif 2 induit une complexité importante en raison de l'intégration très poussée des fonctions hyperfréquence. La distribution des signaux hyperfréquence s'avère de plus délicate. A titre d'exemple, pour obtenir un diagramme de rayonnement satisfaisant et ainsi tenir des exigences données relatives aux performances du radar, il est nécessaire de garantir la stabilité relative en amplitude de phase des différents modules actifs 2. Chaque module actif 2 doit donc être pourvu d'un dispositif de calibration au niveau hyperfréquence et chaque déphaseur hyperfréquence 7 doit comporter un nombre élevé de bits. Il en résulte un coût par module actif 2 élevé.

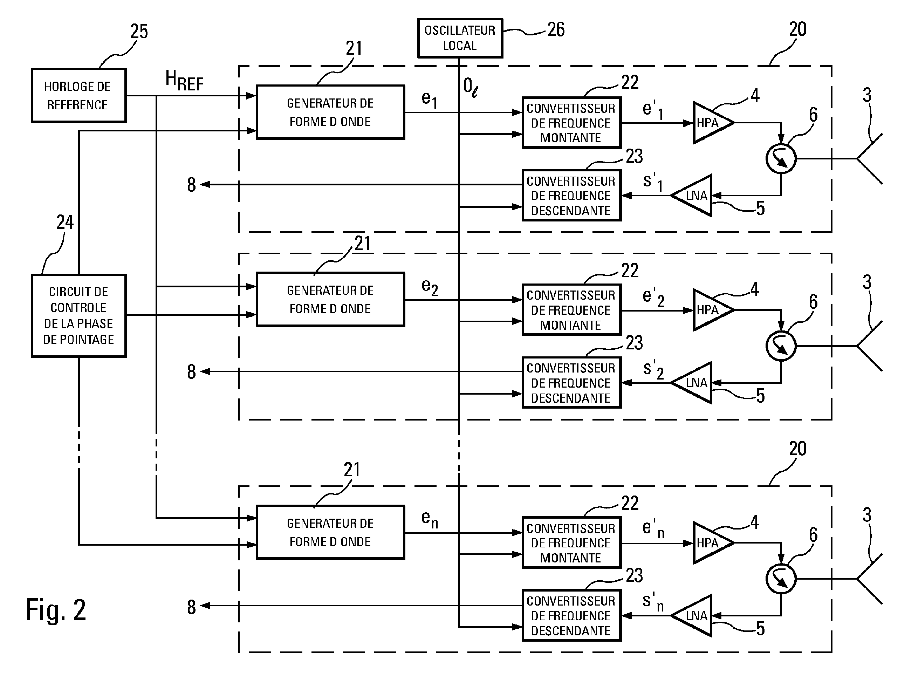

La figure 2 montre une antenne à balayage électronique selon l'invention. Cette antenne à structure modulaire comporte notamment une série de modules actifs 20. Chaque module actif 20 a notamment une voie d'émission comportant :
- un générateur de forme d'onde 21 délivrant un signal e₁, e₂,..., eₙ ;
- un convertisseur de fréquence montante 22 délivrant un signal e'₁, e'₂,...,e'ₙ ;
- un amplificateur de puissance 4.

Chaque module actif peut comporter une voie de réception. Cette voie de réception comporte notamment :
- un amplificateur faible bruit 5 délivrant un signal s'₁ ,s'₂,... ,s'ₙ ;
- un convertisseur de fréquence descendante 23.
Le signal en sortie du convertisseur de fréquence descendante 23 est dirigé vers une sortie 8 connectée à un ou plusieurs récepteurs.

Un circulateur 6 s'intercale entre la voie d'émission et la voie de réception de chaque module actif 20.

L'antenne comporte notamment un ensemble de modules actifs 20. Les circulateurs 6 des ces modules actifs 20 sont reliés à un ou plusieurs éléments rayonnants.

L'antenne comporte de plus au moins un circuit de contrôle de la phase de pointage 24 délivrant notamment des consignes de phase au générateur de forme d'onde 21 de chaque module actif 20.

Des signaux temporels H_{ref} délivrés par au moins une horloge de référence 25 sont distribués aux générateurs de forme d'onde des modules actifs 20. Au moins un oscillateur local 26 délivre des signaux temporels OL aux convertisseurs de fréquence montante 22 et aux convertisseurs de fréquence descendante 23.

Les modules actifs 20 correspondent à des entités fonctionnelles. Aussi, les composants d'un module actif 20 peuvent être physiquement localisés sur plusieurs supports ou au contraire être regroupés dans un même composant. De même le circuit de contrôle de la phase de pointage 24 ainsi que l'horloge de référence 25 et l'oscillateur local 26 peuvent être physiquement délocalisé vis à vis de l'antenne.

Les générateurs de forme d'onde 21 reçoivent des consignes de phase du circuit de contrôle de la phase de pointage 24. Les générateurs de forme d'onde 21 reçoivent aussi une consigne en fréquence sous la forme d'un signal temporel de référence H_{ref} délivré par l'horloge de référence 25. A partir de ces signaux, chaque générateur de forme d'onde 21 synthétise une forme d'onde e₁, e₂,.... en à une fréquence intermédiaire correspondant à la consigne, par exemple 1 GHz. Le signal e₁, e₂,..., en délivré par chaque générateur de forme d'onde 21 est donc un signal commandable en phase, puisque la phase de ce signal e₁, e₂,..., en généré est asservie à la consigne reçue par le générateur de forme d'onde 21.

Les convertisseurs de fréquence montante 22 reçoivent en entrée les signaux e₁, e₂,..., en en fréquence intermédiaire délivrés par les générateurs de forme d'onde 21 ainsi que le signal temporel OL issu de l'oscillateur local 26. Les convertisseurs de fréquence montante 22 multiplient les signaux e₁, e₂,..., en par le signal temporel OL puis appliquent au signal résultant si nécessaire une multiplication par un facteur fixé à priori, obtenant ainsi des signaux de sortie e'₁, e'₂,..., e'ₙ. Les convertisseurs de fréquence montante 22 assurent une fonction de transposition et de multiplication en fréquence. Les signaux e'₁, e'₂,..., e'ₙ sont ensuite amplifiés par des amplificateurs de puissance 4 avant d'être émis.

Les convertisseurs de fréquence descendante 23 reçoivent en entrée les signaux s'₁, s'₂,...,s'ₙ reçus d'amplificateurs faible bruit 5, ainsi que le signal temporel OL issu de l'oscillateur local 26. Les convertisseurs de fréquence descendante 23 multiplient les signaux s'₁, s'₂,...,s'ₙ par le signal temporel OL puis appliquent au signal résultant si nécessaire une multiplication par un facteur fixé à priori, obtenant ainsi des signaux de sortie s₁, s₂,...,sₙ en fréquence intermédiaire. Les convertisseurs de fréquence descendante 24 assurent donc une fonction de transposition en fréquence. Les signaux s₁, s₂,...,sₙ sont ensuite redirigés par l'intermédiaire des sorties 8 vers un ou plusieurs récepteurs afin d'être traités et présentés à l'utilisateur.

On a ainsi une antenne à balayage électronique à génération de forme d'onde distribuée. En effet, la génération de forme d'onde est décentralisée dans chaque module actif 20 de l'antenne. La fonction émission est complètement parallélisée et partiellement redondée : le point de panne unique formé par l'unique générateur de forme d'onde 1 d'une antenne selon l'art antérieur est supprimé par la décentralisation des générateurs de forme d'onde 21 dans chaque module actif 20 dans une antenne selon l'invention.

Avantageusement, une antenne selon l'invention n'utilise plus de déphaseur 7. Les modules actifs 20 n'effectuent plus d'opérations de déphasage du signal à émettre puisque les générateurs de forme d'onde 21 remplissent cette fonction. Les fonctions réalisées en hyperfréquence traditionnellement au niveau des modules actifs 20 sont reportées au niveau des générateurs de forme d'onde 21 en fréquence intermédiaire. Chaque module actif 20 est associée à un générateur de forme d'onde 21. La fonction émission est de plus complètement parallélisée et de ce fait plus robuste et plus fiable vis à vis d'éventuelles défaillances. Les différents circuits de contrôle (non représentés sur les figures) peuvent ainsi être réalisés en fréquence intermédiaire.

Dans un mode de réalisation, les générateurs de forme d'onde 21 sont implémentés sous la forme de circuits à synthèse digitale. Les générateurs de forme d'onde 21 reçoivent une consigne fréquentielle sous forme de signaux temporels délivrés par une ou plusieurs horloges de référence 25. Les formes d'onde issues de ces circuits peuvent alors être transposées et/ou multipliées en fréquence pour générer l'onde hyperfréquence destinée à alimenter les amplificateurs de puissance 4.

Les générateurs de forme d'onde 21 peuvent être commandés en phase et en fréquence avec une grande stabilité dans le temps et avec une grande pureté spectrale. La calibration des modules actifs est donc simplifiée voire supprimée. Il est de plus possible à partir d'une horloge unique de générer pour chaque voie d'émission une forme d'onde différente mais toutefois cohérente avec les autres formes d'onde.

Dans un autre mode de réalisation, le radar utilise la technique de compression d'impulsion. Les générateurs de forme d'onde 21 délivrent alors sur chacune des voies d'émission de façon cohérente et indépendante un même code de compression, déphasé pour chaque voie en fonction de la direction de pointage souhaité. Les générateurs de forme d'onde 21 peuvent alors réaliser la compression d'impulsion ainsi que le déphasage du plan d'onde à l'émission.

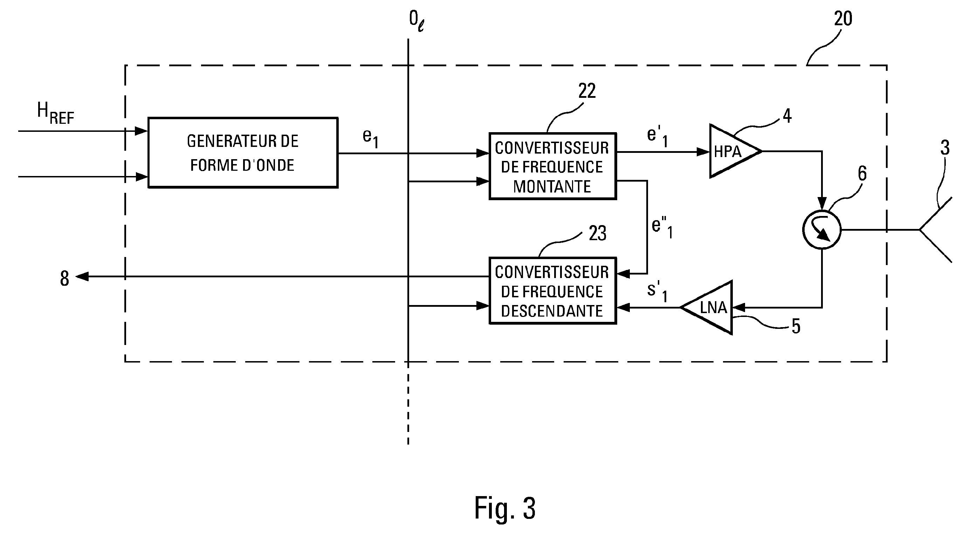

La figure 3 illustre un autre mode de réalisation d'un module actif selon l'invention. La numérotation de la figure reprend celle de la figure 2. Le convertisseur de fréquence montante 22 transmet un signal e"₁ au convertisseur de fréquence descendante 23. Le signal e"₁ est le signal conjugué et retardé du signal e'₁. Le signal s'₁ reçu sur la voie de réception est multiplié au niveau du convertisseur de fréquence descendante 23 par le signal conjugué et retardé e"1 de la forme d'onde émise. La formation du faisceau est donc réalisée par le générateur de forme d'onde 21.

L'invention peut notamment être mise en oeuvre dans un radar météorologique ou encore dans un radar anticollision. Ce radar peut être un radar aéroporté.

## Revendications

1. Module actif adapté à l'émission radiofréquence comportant au moins un amplificateur de puissance (4), ledit amplificateur de puissance (4) délivrant un signal alimentant un ou plusieurs éléments rayonnants (3) **caractérisé en ce qu'**il comporte au moins un générateur de forme d'onde (21) délivrant à l'amplificateur de puissance (4) un signal (e₁,e₂,...,eₙ) commandable en phase.

2. Module actif selon la revendication1 **caractérisé en ce que** le générateur de forme d'onde (21) est un circuit à synthèse digitale directe.

3. Module actif selon la revendication 1 **caractérisé en ce que** le générateur de forme d'onde (21) délivre un signal (e₁,e₂,...,eₙ) en fréquence intermédiaire.

4. Module actif selon la revendication 3 **caractérisé en ce que** le signal (e₁,e₂,...,eₙ) délivré par le générateur de forme d'onde (21) est transposé et/ou multiplié en fréquence par au moins un convertisseur de fréquence montante (22).

5. Module actif selon l'une des revendications précédentes **caractérisé en ce qu'**il comporte au moins un amplificateur faible bruit (5), un circulateur (6) relié d'une part à un élément rayonnant (3), d'autre part à l'amplificateur de puissance (4) et à l'amplificateur faible bruit (5), le signal (s'₁, s'₂,...,s'ₙ) de sortie de l'amplificateur faible bruit (5) étant dirigé vers un récepteur par l'intermédiaire d'une sortie 8.

6. Module actif selon la revendication 5 **caractérisé en ce que** le signal (s'₁, s'₂,...,s'ₙ) est transposé et/ou multiplié en fréquence par au moins un convertisseur de fréquence descendante (23).

7. Module actif selon les revendications 4 et 6 **caractérisé en ce que** le convertisseur de fréquence montante (22) envoie au convertisseur de fréquence descendante (23) un signal conjugué et retardé (e"1) du signal (e'1) envoyé à l'amplificateur de puissance 4, le convertisseur de fréquence descendante (23) multipliant le signal (s'₁, s'₂,...,s'ₙ) reçu de l'amplificateur faible bruit (5) par le signal conjugué (e"1).

8. Antenne à balayage électronique comportant des éléments rayonnants (3), chaque élément rayonnant (3) étant alimenté par au moins un module actif (20) selon l'une des revendications précédentes.

9. Antenne à balayage électronique selon la revendication 8 **caractérisé en ce qu'**elle comporte au moins un circuit de contrôle de la phase de pointage (24) délivrant une consigne de phase propre à chaque module actif (20), la phase étant déterminée pour chaque module actif (20) en fonction de la direction de pointage souhaitée.

10. Radar comportant au moins une antenne selon la revendication 8.

11. Radar selon la revendication 10 **caractérisé en ce qu'**il comporte au moins un circuit de contrôle de la phase de pointage (24) délivrant une consigne de phase propre à chaque module actif (20), la phase étant déterminée pour chaque module actif (20) en fonction de la direction de pointage souhaitée.

12. Radar comportant au moins une antenne selon la revendication 9.

13. Radar selon l'une des revendications 10 à 12 **caractérisé en ce qu'**il est appliqué à la détection et la localisation des phénomènes météorologiques.
